# EUROPÄISCHE PATENTSCHRIFT

(11) **EP 2 134 567 B1**
(45) Veröffentlichungstag und Bekanntmachung des Hinweises auf die Patenterteilung: **30.11.2016**
(21) Anmeldenummer: 08735034.4
(22) Anmeldetag: 04.04.2008
(51) Int. Cl.: B60N 2/36, B60N 2/22

(54) **NEIGUNGSVERSTELLER, INSBESONDERE FÜR DIE RÜCKENLEHNE EINES FAHRZEUGRÜCKSITZES**
INCLINATION ADJUSTER IN PARTICULAR FOR THE BACKREST OF A VEHICLE BACK SEAT
SYSTEME DE REGLAGE DE L'INCLINAISON, EN PARTICULIER DU DOSSIER D'UN SIEGE ARRIERE DE VEHICULE

(30) Priorität: 05.04.2007 DE 102007016935; 28.08.2007 DE 102007040806; 21.11.2007 DE 102007056156
(43) Veröffentlichungstag der Anmeldung: 23.12.2009
(73) Patentinhaber: Johnson Controls GmbH, 51399 Burscheid (DE)
(72) Erfinder: VEDDER, Andreas, 42781 Haan (DE); FINNER, Holger, 42499 Hückeswagen (DE)
(74) Vertreter: Wolff, Felix
(86) Internationale Anmeldenummer: PCT/EP2008/002709
(87) Internationale Veröffentlichungsnummer: WO 2008/122418

(56) Entgegenhaltungen:
- FR-A- 2 710 883
- FR-A- 2 780 353
- FR-A- 2 789 636
- JP-A- 2003 054 299
- JP-A- 2003 312 329
- JP-A- 2004 321 314
- JP-A- 2004 322 743
- US-A1- 2005 062 327
- US-B1- 6 312 055

## Beschreibung

Die Erfindung geht aus von einem Neigungsversteller für einen Fahrzeugsitz. Der Neigungsversteller weist dabei ein Gleitstück und eine Schiene auf, wobei das Gleitstück auf der Schiene zur Neigungsverstellung verschoben wird. Die Schiene ist gebogen vorgesehen (siehe dazu US 2005/006 2327 A1, dem Oberbegriff entsprechend).

Solche Neigungsversteller sind allgemein bekannt. Die Druckschrift FR 2 710 883 A1 offenbart beispielsweise einen Neigungsversteller für einen Fahrzeugsitz, wobei ein Gleitstück auf einer Schiene verschoben wird. Die Druckschrift JP 2003-54299 A, die Druckschrift JP 2003-312329 A, die Druckschrift JP 2004-321314 und die Druckschrift JP 2004-322743 A offenbaren ebenfalls Neigungsversteller mit Gleitstück und Schiene. Nachteilig bei den Neigungsverstellem nach dem Stand der Technik ist der komplizierte Aufbau der Schiene, die in der Regel als L- oder U-förmig gebogenes und/oder als mehrstückiges Bauteil gefertigt wird.

Es war daher die Aufgabe der vorliegenden Erfindung einen Neigungsversteller anzugeben, der einen Aufbau mit weniger und leichteren Bauteilen als im Stand der Technik aufweist und trotzdem eine sichere Neigungsverstellung ermöglicht.

Gelöst wird die Aufgabe durch einen Neigungsversteller für einen Fahrzeugsitz mit den Merkmalen des Anspruchs 1, wobei der Neigungsversteller ein Gleitstück und eine Schiene aufweist. Das Gleitstück ist dabei zur Neigungsverstellung auf der Schiene verschiebbar und die Schiene ist gebogen vorgesehen. Zudem ist die Schiene einstückig und als Flachprofil ausgebildet.

Eine einstückig ausgebildete Schiene wird beispielsweise durch Umformen eines Materialstücks gebildet. Beispielsweise kann die Schiene aus einem einzigen Metallstreifen gefertigt sein. Unter einem Flachprofil soll ein Bauteil verstanden werden, dessen Haupterstreckungsfläche wesentlich größer ist als die Dicke senkrecht zur Haupterstreckungsfläche.

Durch die einstückig und als Flachprofil ausgebildete Schiene ist diese wesentlich unkomplizierter herstellbar und mit geringerem Zeitaufwand in den Neigungsversteller einbaubar. Zudem wird die Schiene durch die einstückige Bauweise besonders robust, da keine an der Schiene angeformten oder befestigten Bauteile der Schiene von dieser abbrechen können. Weiterhin beansprucht eine als Flachprofil ausgebildete Schiene wenig Bauraum im Fahrzeug und weist in der Regel nur ein vergleichsweise geringes Gewicht auf.

Erfindungsgemäß ist die Schiene gebogen, vorzugsweise bogenförmig vorgesehen, ohne dass dabei ihre Erstreckung im Wesentlichen in zwei Dimensionen verloren geht. Vorzugsweise befinden sich Form- und/oder Kraftschlussmittel an der Außenseite der Krümmung der Schiene.

Bevorzugt wird der Neigungsversteller mit Schiene und Gleitstück zur Neigungsverstellung einer Rückenlehne eines Fahrzeugrücksitzes verwendet. Besonders bevorzugt ist dabei die Schiene insbesondere in Längsrichtung eines Fahrzeuges an dessen Karosserie angebracht, beispielsweise im Bereich des Radkastens für einen Hinterreifen. Das Gleitstück ist vorzugsweise an der Rückenlehne befestigt.

Bei einer Neigungsverstellung gleite bevorzugt das Gleitstück entlang der Schiene, wobei beispielsweise eine Rückenlehne relativ zu einem Sitzteil des Fahrzeugsitzes geneigt wird. Um die Rückenlehne in einer Neigungslage zu fixieren, wirken vorzugsweise das Gleitstück und die Schiene form- und/oder kraftschlüssig zusammen.

Alternativ ist das Gleitstück an der Karosserie angeordnet und die Schiene insbesondere in Längsrichtung eines Fahrzeuges an der Rückenlehne eines Fahrzeugsitzes angebracht
Bei einer Neigungsverstellung gleite bevorzugt die Schiene entlang des Gleitstücks, wobei beispielsweise eine Rückenlehne relativ zu einem Sitzteil des Fahrzeugsitzes geneigt wird. Um die Rückenlehne in einer Neigungslage zu fixieren, wirken das Gleitstück und die Schiene form- und/oder kraftschlüssig zusammen.

Erfindungsgemäss weist die Schiene für das form- und/oder kraftschlüssige Zusammenwirken mit dem Gleitstück eine Mehrzahl von Verrastmitteln auf.

Bevorzugt weist die Schiene die Verrastmittel nur in Teilbereichen auf, wobei die Schiene vorzugsweise drei nicht überlappende Teilbereiche aufweist. Bevorzugt sind zwei dieser drei Teilbereiche im Randbereich der Schiene und ein Teilbereich in der Mitte der Schiene vorgesehen. Das Gleitstück kann dabei bevorzugt nur in diesen Teilbereichen mit der Schiene form und/oder kraftschlüssig zusammenwirken. Beispielsweise kann die Schiene an drei Teilbereichen jeweils drei Zähne und vier Ausnehmungen aufweisen, wobei durch die Zähne und die Ausnehmungen eine Verzahnung als Verrastmittel gebildet wird. Bei einer so aufgebauten Schiene kann beispielsweise eine Rückenlehne in drei Positionen zwischen der Frontscheibe und der Heckscheibe des Fahrzeuges verstellt werden. Selbstverständlich können auch mehr oder weniger als drei Neigungslagen und somit mehr oder weniger als drei Teilbereiche für das Verrastmittel auf der Schiene vorgesehen sein.

In einer anderen bevorzugten Ausführungsform sind die Verrastmittel über die gesamte Längsseite der Schiene ausgebildet. Das Gleitstück kann folglich über die gesamte Länge der Schiene mit dieser form- und/oder kraftschlüssig zusammenwirken. Eine Rückenlehne beispielsweise kann durch diese Ausführungsform eine Vielzahl von Neigungslagen relativ zum Sitzteil einnehmen.

Erfindungsgemäss weist das Gleitstück eine Klaue auf, wobei die Klaue eine Mehrzahl von komplementären Verrastmitteln aufweist. Mit den komplementären Verrastmitteln greift die Klaue in die Schiene ein, so dass die Klaue und die Schiene form- und/oder kraftschlüssig zusammenwirken. Insbesondere greift die Klaue mit den komplementären Verrastmittel in die Verrastmittel der Schiene ein. Durch die Mehrzahl von komplementären Verrastmitteln, die in die Schiene eingreifen und der form- und/oder kraftschlüssigen Verbindung zwischen den Verrastmitteln und den komplementären Verrastmitteln wird die Verbindung zwischen dem Gleitstück und der Schiene beziehungsweise der Klaue und der Schiene besonders robust und stabil. Auch bei einem Unfall löst sich so in vorteilhafter Weise die Klaue nicht ungewollt von der Schiene.

Bevorzugt ist die Klaue mittels eines Gelenks drehbar an dem Gleitstück angeordnet. Die Klaue ist dabei bevorzugt in Richtung der Schiene und von der Schiene weg drehbar vorgesehen. Für eine Neigungsverstellung ist die Klaue vorzugsweise von der Schiene weg gedreht, so dass die komplementären Verrastmittel der Klaue nicht in die Schiene eingreifen. Soll keine Neigungsverstellung vorgenommen werden, so ist die Klaue bevorzugt in Richtung der Schiene gedreht, so dass die komplementären Verrastmittel mit der Schiene beziehungsweise mit den Verrastmittel form- und/oder kraftschlüssig zusammenwirken.

Bevorzugt weist das Gleitstück ein Federmittel auf, wobei das Federmittel die Klaue in Richtung der Schiene vorspannt. Die Klaue kann folglich nur gegen die Kraft des Federmittels von der Schiene weggedreht werden. Die form- und/oder kraftschlüssige Verbindung zwischen der Klaue und der Schiene kann so vorteilhaft gesichert werden. Da durch die kraft und/oder formschlüssige Verbindung das Gleitstück an einer Bewegung entlang der Schiene gehindert wird, kann beispielsweise die Sicherheit des Fahrzeugsitzes gegen ein ungewolltes Verstellen der Rückenlehne auch bei einem Unfall erhöht werden.

Vorzugsweise dreht die Klaue um das Gelenk von der Schiene weg, wenn eine Handhabe betätigt wird. Vorzugsweise erfolgt die Verschwenkung der Klaue soweit, bis die komplementären Verrastmittel der Klaue nicht länger in die Schiene beziehungsweise in das Verrastmittel der Schiene eingreifen. Weiterhin kann in einer bevorzugten Ausführungsform vorgesehen sein, die Position der so verschwenkten Klaue zu fixieren. Um die Fixierung aufzuheben muss vorzugsweise erneut die Handhabe betätigt werden. In einer anderen bevorzugten Ausführungsform muss die Handhabe lediglich für eine Drehung der Klaue von der Schiene weg betätigt werden. Wird die Betätigung der Handhabe beendet, wird die Klaue bevorzugt durch die Rückstellkraft des Federmittels wieder in Richtung der Schiene und in Eingriff mit der Schiene gedreht.

Erfindungsgemäss sind die komplementären Verrastmittel der Klaue und/oder die Verrastmittel der Schiene als Verzahnungen ausgebildet. In vorteilhafter Weise können so die Verrastmittel und/oder die komplementären Verrastmittel beispielsweise unkompliziert durch einen Stanzschritt gebildet werden.

Weiterhin erfindungsgemäss ist mindestens ein Zahn der Verzahnung der komplementären Verrastmittel keilförmig ausgebildet. Besonders bevorzugt werden die komplementären Verrastmittel durch jeweils vier Zähne gebildet, wobei bevorzugt einer der mittleren Zähne keilförmig ausgebildet ist. Durch die Keilform eines Zahns verspannt die Klaue mit der Schiene, sobald die Klaue in Eingriff mit der Schiene steht. Auch eine geringe Bewegung der Klaue innerhalb der Verzahnung der Schiene kann so verhindert werden, so dass hierdurch entstehende Klappergeräusche nicht auftreten. Selbstverständlich können auch zwei, drei oder alle Zähne keilförmig ausgebildet sein.

Weiterhin erfindungsgemäss sind die Zähne der Klaue so dimensioniert, dass die Zähne bei einer form- und/oder kraftschlüssigen Verbindung mit der Schiene über diese hinausstehen. Bevorzugt befindet sich die Schiene hierbei in der Mitte der vertikalen Ausdehnung der Zähne. Vorzugsweise stützen sich die Zähne mit den über die Schiene hinausragenden Bereichen an der Klaue ab. Die Zähne der Klaue können hierdurch vorteilhaft mehr Last aufnehmen ohne dabei beschädig zu werden.

Vorzugsweise ist die Schiene ortsfest, beispielsweise an der Karosserie eines Kraftfahrzeuges, vorgesehen und das Gleitstück an der Rückenlehne angeordnet oder umgekehrt.

Ein weiterer, zur vorliegenden Erfindung nicht gehörender Gegenstand ist die Rückenlehne eines Fahrzeugrücksitzes aufweisend einen erfindungsgemäßen Neigungsversteller.

Vorzugsweise ist die Schiene mit der Rückenlehne reversibel verbindbar. Diese bevorzugte Ausführungsform der Rückenelehne ist insbesondere dann von Interesse, wenn das Gleitstück ortsfest ist und sich die Schiene gemeinsam mit der Rückenlehne dazu bewegt.

Noch ein weiterer, zur vorliegenden Erfindung nicht gehörender Gegenstand ist ein Verfahren zur Neigungsverstellung der Rückenlehne eines Fahrzeugsitzes. Hierbei wird bei der Neigungsverstellung ein Flachprofil von einem Gleitstück umschlossen. Das Flachprofil bildet eine vorzugsweise ortsfeste Schiene, auf der das Gleitstück zur Neigungsverstellung verschoben wird. Alternativ wird das Flachprofil relativ zu dem ortsfesten Gleitstück zur Neigungsverstellung der Rückenlehne des Fahrzeugsitzes verschoben.

Bevorzugt ist das Gleitstück relativ zur Schiene fixiert so lange das Verrastmittel der Schiene form- und/oder kraftschlüssig mit dem komplementären Verrastmittel des Gleitstücks zusammenwirkt. Die komplementären Verrastmittel sind dabei bevorzugt an einer Klaue des Gleitstücks befestigt.

Die Verbindung zwischen der Klaue und der Schiene wird bevorzugt gelöst, wenn die Klaue durch die Betätigung einer Handhabe entgegen der Kraft eines Federmittels um ein Gelenk von der Schiene weg gedreht wird. Vorzugsweise kann das Gleitstück auf der Schiene oder die Schiene entlang der Klaue verschoben werden, wenn die Klaue und die Schiene beziehungsweise die komplementären Verrastmittel und die Verrastmittel nicht mehr form- und/oder kraftschlüssig zusammenwirken. Durch das Verschieben des Gleitstücks auf der Schiene oder der Schiene relativ zum Gleitstück wird vorzugsweise eine Rückenlehne eines Fahrzeugrücksitzes neigungsverstellt.

Die Erfindung wird im Folgenden anhand von Figuren näher beschrieben, wobei die Figuren lediglich Ausführungsbeispiele der Erfindung darstellen und den allgemeinen Erfindungsgedanken nicht einschränken.
- **Figur 1**: stellt schematisch einen Neigungsversteller mit einer Schiene und einem Gleitstück dar.
- **Figur 2**: stellt schematisch den Neigungsversteller dar, wobei eine Ansicht auf eine Verzahnung der Schiene dargestellt ist.
- **Figur 3**: stellt schematisch eine andere Ansicht als in Figur 2 auf den Neigungsversteller dar.
- **Figur 4**: stellt schematisch den Neigungsversteller in einer ähnlichen Ansicht wie in Figur 2 dar.
- **Figuren 5, 6**: zeigen eine weitere Ausführungsform des erfindungsgemäßen Neigungsverstellers
- **Figur 7**: zeigt den Neigungsversteller gemäß den Figuren 5 und 6 im eingebauten Zustand

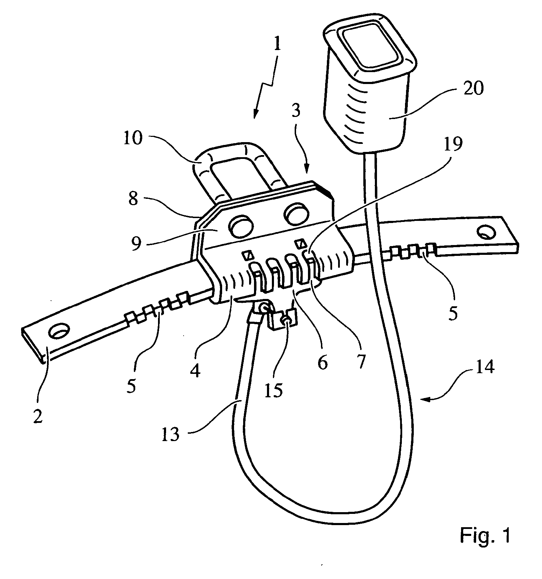

Die Figuren 1 bis 4 stellen schematisch einen Neigungsversteller 1 dar. Der Neigungsversteller 1 besteht bevorzugt aus einer Schiene 2 und einem darauf geführten Gleitstück 3, welches in unterschiedlichen Schiebestellungen auf der Schiene 2 verriegelbar ist, wobei die Verriegelung durch eine von der Querseite der Schiene 2 eingreifenden Klaue 6 bewirkt wird. Die Schiene 2 ist bevorzugt an einem Kraftfahrzeugsitz an der Karosserie oder an einer Rückenlehne befestigt, während das Gleitstück 3 vorzugsweise an der Rückenlehne oder der Karosserie angeordnet ist. Besonders bevorzugt wird die Schiene 2 in Fahrzeuglängsrichtung in der Nähe des Radkastens für einen Hinterreifen angebracht. Das Gleitstück 3 ist bevorzugt an der Rückenlehne eines Fahrzeugrücksitzes angebracht.

Wie in der Figur 1 schematisch dargestellt weist der Neigungsversteller 1 die Schiene 2 und das Gleitstück 3 auf, wobei das Gleitstück 3 die Schiene 2 mit einem Gehäuse 4 umgreift. Da sich das bevorzugt an der Rückenlehne befestigte Gleitstück 3 im Ausführungsbeispiel beim Vorschwenken der Rückenlehne auf einer Kreisbahn um das Gelenk der Rückenlehne bewegt, ist die karosseriefeste Schiene 2 gebogen ausgebildet. Die Biegung der Schiene 2 erfolgt bevorzugt bogenförmig, wobei die Fläche der Schiene 2, die in Richtung der Lasche 16 zeigt in einem mittleren Bereich der Schiene 2 (Bereich des Gleitstücks 3 in Figur 1) bevorzugt gestaucht und in einem Randbereich der Schiene 2 bevorzugt gestreckt wird durch die Biegung. Die Schiene 2 wird bevorzugt in Längsrichtung eines Sitzteils an der Karosserie befestigt.

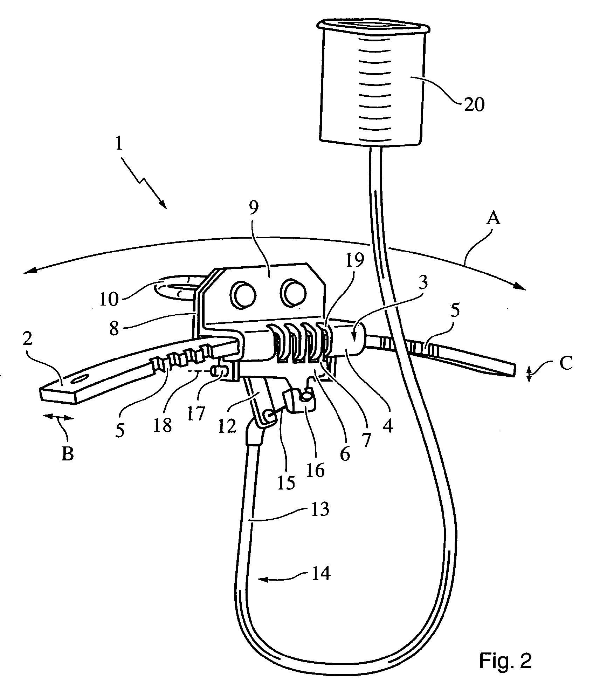

Besonders bevorzugt besteht die Schiene 2 aus einem Stahlstreifen, welcher an einer seiner Längskanten mit einer durch Ausstanzen gebildeten Verzahnung 5 ausgestattet ist. Die Verzahnung 5 soll hierbei auch als Verrastmittel 5 bezeichnet werden. In der Figur 2 ist schematisch die Schiene 2 in einer Seitenansicht dargestellt, wobei insbesondere die Ausbildung der Schiene 2 als Flachprofil anhand der Figur 2 erklärt werden soll. Die Länge der Schiene 2, gekennzeichnet mit dem Pfeil A, soll bei einem Flachprofil als Schiene 2 deutlich größer sein, als die Dicke der Schiene gekennzeichnet mit dem Pfeil C. Die Breite der Schiene 2, gekennzeichnet mit dem Pfeil B, ist dabei von der Breite des Gleitstückes 3 abhängig, da das Gehäuse 4 die Schiene 2 bevorzugt umschließt.

Das Gleitstück 3 ist mit der Klaue 6 versehen, die eine Gruppe von Zähnen 7 aufweist. Die Zähne 7 stellen hierbei die komplementären Verrastmittel 7 der Klaue 6 beziehungsweise des Gleitstücks 3 dar. Diese Gruppe von Zähnen 7 kann mit der Verzahnung 5 der Schiene 2 lösbar in Eingriff gebracht werden, so dass das Gleitstück 3 relativ zur Schiene 2 in mehreren (im Ausführungsbeispiel drei) Stellungen arretierbar ist. Die Klaue 6 beziehungsweise das Gleitstück 3 und die Schiene 2 wirken dann form- und/oder kraftschlüssig zusammen. Erfindungsgemäss ist mindestens einer der Zähne 7 keilförmig ausgebildet. Durch die keilförmige Ausbildung verspannt der Zahn dabei besonders innig mit der Verzahnung 5 der Schiene 2, so dass auch kleine Bewegungen in Richtung des Pfeils B oder in Richtung des Pfeils C (Figur 2) verhindert werden. In vorteilhafter Weise entstehen so keine störenden Klappergeräusche durch ein Aufschlagen des Gleitstücks 3 auf der Schiene 2, während die Schiene 2 und das Gleitstück 3 beziehungsweise die Klaue 6 und die Schiene 2 form- und/oder kraftschlüssig zusammenwirken. Weiterhin bevorzugt weisen die Zähne 7 eine Länge in Richtung des Pfeils C (Figur 2) auf, die größer ist als die Dicke der Schiene 2 in Richtung des Pfeils C. Besonders bevorzugt liegt die Schiene 2 im Wesentlichen in der Mitte der vertikalen Ausdehnung (Richtung des Pfeils C) der Zähne 7, wobei sich die Teilbereiche der Zähne 7, die nicht mit der Schiene 2 in Kontakt stehen, bevorzugt an der Klaue 6 abstützen.

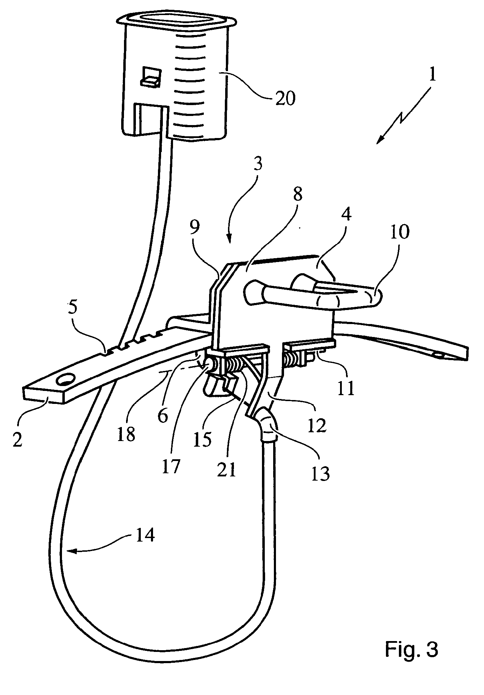

Aus der Seitenansicht der Figur 3 geht schematisch hervor, dass das Gehäuse 4 des Gleitstücks 3 geteilt aufgebaut ist, wobei aus Stahlblech gepresste Segmente 8, 9 im Bereich einer von beiden Segmenten 8, 9 gebildeten auskragenden Blechdoppelung durch einen angenieteten Bügel 10 eines Drehfallenschlosses sowie durch eine dem Bügel 10 gegenüberliegend am Gehäuse 4 vorgesehene Steckverbindung 11 verbunden, vorzugsweise hinterher besonders bevorzugt vernietet sind.

Das Segment 8 bildet ferner einen über das Gehäuse 4 hinausragenden Fortsatz 12 aus, an welchem sich die Hülle 13 eines Bowdenzugs 14 abstützt. Seelen 15 des Bowdenzuges 14 sind dabei bevorzugt mit einer auskragenden Lasche 16 der gabelförmigen Klaue 6 verbunden (Figur 2).

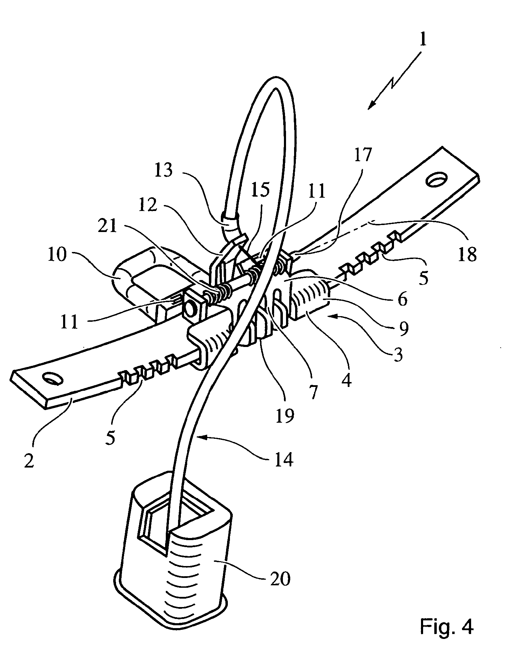

In der Figur 4 ist unter anderem schematisch dargestellt, dass die Klaue 6 bevorzugt um ein an dem Gehäuse 4 angeformtes Gelenk 17 um die Drehachse 18 drehbar gelagert ist. Die Drehachse 18 verläuft dabei bevorzugt unterhalb der Schiene 2. Die Klaue 6 kann bevorzugt in Richtung der Schiene 2 und von der Schiene 2 weg um die Drehachse 18 gedreht werden. Die Zähne 7 und die Lasche 16 sind auf entgegengesetzten Seiten der unterhalb der Schiene 2 verlaufenden Drehachse 18 der Klaue 6 angeordnet. Die Klaue 6 wird durch ein Federmittel 21, bevorzugt durch eine Schenkelfeder 21, in Richtung der Schiene 2 vorgespannt. Die Zähne 7, welche durch Schlitze 19 im Gehäuse 4 in die Schiene 2 eingreifen, werden bei einem Zug auf die Lasche 16 und der damit verbundenen, gegen die Wirkung der die Klaue 6 in Schließrichtung spannenden Schenkelfeder 21 erfolgenden Drehung der Klaue 6 aus der Verzahnung 5 gelöst. Wirken die Zähne nicht mehr form- und/oder kraftschlüssig mit der Verzahnung 5 der Schiene 2 zusammen, kann das Gleitstück 3 zur Neigungsverstellung der Rückenlehne entlang der Schiene 2 verschoben werden.

Die das Gelenk 17 bildenden Bereiche des Gehäuses 4 sind durch paralleles Einschneiden des Stahlblechs und Umbiegen des zwischen den Schnitten befindlichen Bereichs gefertigt. Das Gelenk 17 befindet sich auf der gleichen Seite des Gehäuses 4 wie der Fortsatz 12, aber gegenüberliegend vom Bügel 10.

Die Betätigung des Bowdenzugs erfolgt durch eine Handhabe 20, die an dem freien Ende des Bowdenzugs mit diesem befestigt ist.

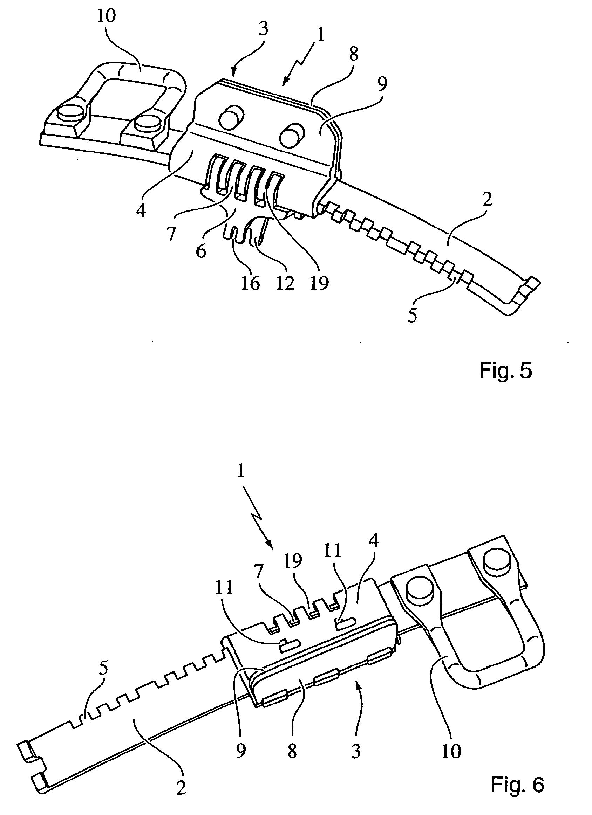

Der Neigungsversteller 1 gemäß den Figuren 5 und 6 besteht aus einem Gleitstück 3, umschlossen von einem Gehäuse 4, in welchem die Schiene 2 verschieblich geführt ist. Da sich die an der Rückenlehne befestigte Schiene 2 im Ausführungsbeispiel beim Verschwenken der Rückenlehne auf einer Kreisbahn um deren Gelenk bewegt, ist die bewegliche Schiene 2 bogenförmig ausgebildet.

Die Schiene 2 besteht aus einem Stahlstreifen, welcher an einer seiner Längskanten mit einer durch Ausstanzen gebildeten Verzahnung 5 ausgestattet ist. Das Gleitstück 3 ist mit einer Klaue 6 versehen, die eine Gruppe von Zähnen 7 aufweist. Diese Gruppe von Zähnen 7 kann mit jeweils einer von mehreren Gruppen von Verzahnungen 5 der Schiene 2 lösbar in Eingriff gebracht werden, so dass die Schiene 2 relativ zum Gleitstück 3 in mehreren Stellungen arretierbar ist. Das Gehäuse 4 des Gleitstücks 3 ist geteilt aufgebaut, wobei die aus Stahlblech gepressten Segmente 8, 9 im Bereich einer von beiden Segmenten 8, 9 gebildeten auskragenden Blechdoppelung mittels zwei der Befestigung an der Karosserie dienenden Schrauben sowie einer gegenüberliegend am Gehäuse 4 vorgesehenen Steckverbindung 11 verbunden sind.

Das Segment 8 bildet ferner einen über das Gehäuse 4 hinausragenden Fortsatz 12 aus, an welchem sich eine Auslöseeinrichtung (z.B. ein Bowdenzug) abstützt, die bei Betätigung eine auskragende Lasche 16 der drehbar gelagerten, gabelförmigen Klaue 6 anzieht. Die Zähne 7, welche durch Schlitze 19 im Gehäuse 4 in die Schiene 2 eingreifen, werden somit bei einem Zug auf die Lasche 16 und der damit verbundenen, gegen die Wirkung eines die Klaue 6 in Schließrichtung spannenden Mediums, z.B. eine Schenkelfeder, erfolgende Drehung der Klaue 6 aus der Verzahnung 5 gelöst.

Ein Bügel 10 ist auf der Schiene 2 so angenietet, dass er an der Rückenlehne 22 lösbar befestigt werden kann, insbesondere durch Einrasten in ein in der Rückenlehne 22 vorgesehenes Drehfallenschloss 23.

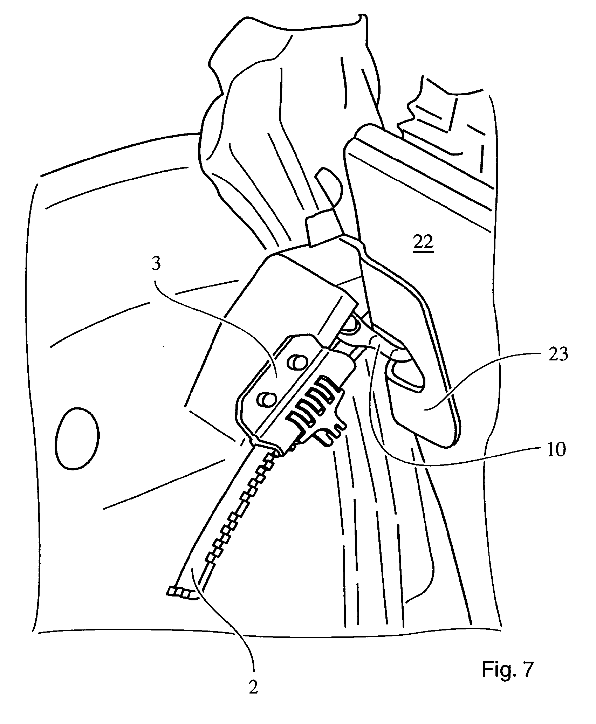

Bei der Ausführungsform gemäß den Figuren 5 - 7 handelt es sich demnach um einen Neigungsversteller, aus einem Gleitstück und einer darin geführten Schiene besteht, welche in unterschiedlichen Schiebestellungen im Gleitstück verriegelbar ist, wobei die Verriegelung durch eine von der Seite her in die Schiene greifende Klaue bewirkt wird. Das Gleitstück ist beim Einsatz an einem Kraftfahrzeugsitz an der Karosserie befestigt, während die Schiene an der Rückenlehne angeordnet ist.

### Bezugszeichenliste

- 1: Neigungsversteller
- 2: Schiene
- 3: Gleitstück
- 4: Gehäuse
- 5: Verzahnung (der Schiene 2) / Verrastmittel
- 6: Klaue
- 7: Zähne (der Klaue 6) / komplementäres Verrastmittel
- 8, 9: Segment (des Gehäuses 4)
- 10: Handhabe, Bügel
- 11: Steckverbindung
- 12: Fortsatz
- 13: Hülle
- 14: Bowdenzug
- 15: Seele
- 16: Lasche
- 17: Gelenk
- 18: Drehachse
- 19: Schlitz
- 20: Handhabe
- 21: Federmittel / Schenkelfeder
- 22: Rückenlehne
- 23: Schloss, Drehfallenschloß

## Patentansprüche

1. Neigungsversteller (1) für einen Fahrzeugsitz mit einer Schiene (2) und einem Gleitstück (3), wobei das Gleitstück (3) auf der Schiene (2) verschiebbar ist und die Schiene (2) gebogen vorgesehen ist, wobei die Schiene (2) einstückig und als Flachprofil ausgebildet ist und eine Mehrzahl von Verrastmitteln (5) aufweist, **dadurch gekennzeichnet, dass**
- das Gleitstück (3) eine Klaue (6) aufweist, wobei die Klaue (6) eine Mehrzahl von komplementären Verrastmitteln (7) zum Eingreifen in die Schiene (2) aufweist,
- bei einem Eingriff der Klaue (6) in die Schiene (2) die komplementären Verrastmittel (7) und die Verrastmittel (5) form- und/oder kraftschlüssig zusammenwirken,
- die komplementären Verrastmittel Zähne (7) aufweisen und die Verrastmittel (5) als Verzahnung (5) ausgebildet sind,
- mindestens einer der Zähne (7) der komplementären Verrastmittel (7) keilförmig ausgebildet ist und
- bei einem Eingriff der Klaue (6) in die Schiene (2) die komplementären Verrastmittel (7) über der Schiene (2) hinausstehen.

2. Neigungsversteller (1) nach Anspruch 1, **dadurch gekennzeichnet, dass** die Klaue (6) um ein Gelenk (17) drehbar vorgesehen ist.

3. Neigungsversteller (1) nach Anspruch 1 oder 2, **dadurch gekennzeichnet, dass** die Schiene (2) die Verrastmittel in nicht überlappenden Teilbereichen aufweist.

4. Neigungsversteller (1) nach einem der Ansprüche 1 bis 3, **dadurch gekennzeichnet, dass** die Klaue (6) durch ein Federmittel (21) in Richtung der Schiene (2) vorgespannt ist.

5. Neigungsversteller (1) nach einem der Ansprüche 1 bis 4, **dadurch gekennzeichnet, dass** die Klaue (6) nach Betätigung einer Handhabe (20) um das Gelenk (17) dreht.

## Claims

1. Inclination adjuster (1) for a vehicle seat comprising a rail (2) and a slide piece (3), the slide piece (3) being displaceable on the rail (2) and the rail (2) being provided as a curved rail, wherein the rail (2) is configured in one piece and as a flat profile and comprises a plurality of latching means (5), **characterized in that**
- the slide piece (3) has a claw (6), the claw (6) comprising a plurality of complementary latching means (7) for engaging in the rail (2),
- during an engagement of the claw (6) in the rail (2) the complementary latching means (7) and the latching means (5) cooperate positively and/or non-positively,
- the complementary latching means have teeth (7) and the latching means (5) are configured as toothed portions (5),
- at least one of the teeth (7) of the complementary latching means (7) is of wedge-shaped configuration and
- during an engagement of the claw (6) in the rail (2) the complementary latching means (7) protrude beyond the rail (2).

2. Inclination adjuster (1) according to Claim 1, **characterized in that** the claw (6) is provided to be rotatable about an articulation (17).

3. Inclination adjuster (1) according to Claim 1 or 2, **characterized in that** the rail (2) has the latching means in partial regions which do not overlap.

4. Inclination adjuster (1) according to one of Claims 1 to 3, **characterized in that** the claw (6) is pretensioned by a spring means (21) in the direction of the rail (2).

5. Inclination adjuster (1) according to one of Claims 1 to 4, **characterized in that** the claw (6) after actuating a handle (20) rotates about the articulation (17).

## Revendications

1. Système de réglage de l'inclinaison (1) pour un siège de véhicule avec un rail (2) et un coulisseau (3), dans lequel le coulisseau (3) est déplaçable sur le rail (2) et le rail (2) est prévu sous forme courbe, dans lequel le rail (2) est réalisé en une seule pièce et sous forme de profilé plat et présente une multiplicité de moyens d'encliquetage (5), **caractérisé en ce que**
- le coulisseau (3) présente une griffe (6), dans lequel la griffe (6) présente une multiplicité de moyens d'encliquetage complémentaires (7) à engager dans le rail (2),
- lors d'un engagement de la griffe (6) dans le rail (2), les moyens d'encliquetage complémentaires (7) et les moyens d'encliquetage (5) coopèrent par emboîtement et/ou par adhérence,
- les moyens d'encliquetage complémentaires présentent des dents (7) et les moyens d'encliquetage (5) sont réalisés sous forme de denture (5),
- au moins une des dents (7) des moyens d'encliquetage complémentaires (7) est réalisée en forme de coin, et
- lors d'un engagement de la griffe (6) dans le rail (2), les moyens d'encliquetage complémentaires (7) sont saillants au-dessus du rail (2).

2. Système de réglage de l'inclinaison (1) selon la revendication 1, **caractérisé en ce que** la griffe (6) est prévue sous forme rotative autour d'une articulation (17).

3. Système de réglage de l'inclinaison (1) selon la revendication 1 ou 2, **caractérisé en ce que** le rail (2) présente les moyens d'encliquetage dans des régions partielles non chevauchantes.

4. Système de réglage de l'inclinaison (1) selon l'une quelconque des revendications 1 à 3, **caractérisé en ce que** la griffe (6) est précontrainte par un moyen de ressort (21) en direction du rail (2).

5. Système de réglage de l'inclinaison (1) selon l'une quelconque des revendications 1 à 4, **caractérisé en ce que** la griffe (6) tourne autour de l'articulation (17) après l'actionnement d'une manette (20).
